(19) Europäisches Patentamt
European Patent Office
Office européen des brevets

(11) Veröffentlichungsnummer: **0 161 497**
**B1**

(12) **EUROPÄISCHE PATENTSCHRIFT**

(45) Veröffentlichungstag der Patentschrift: **28.11.90**

(51) Int. Cl.$^5$: **B 01 D 53/34,** F 23 J 15/00

(21) Anmeldenummer: **85104474.3**

(22) Anmeldetag: **12.04.85**

(54) **Verfahren und Vorrichtung zur Rauchgasentschwefelung von Feuerungsanlagen.**

(30) Priorität: **19.04.84 AT 1322/84**

(43) Veröffentlichungstag der Anmeldung:
**21.11.85 Patentblatt 85/47**

(45) Bekanntmachung des Hinweises auf die Patenterteilung:
**28.11.90 Patentblatt 90/48**

(84) Benannte Vertragsstaaten:
**AT BE CH DE FR GB IT LI LU NL SE**

(56) Entgegenhaltungen:
**DE-A-3 318 880**
**US-A-3 852 410**
**US-A-4 220 478**

(73) Patentinhaber: **WAAGNER-BIRO AKTIENGESELLSCHAFT**
**Stadlauer-Strasse 54 Postfach 11**
**A-1221 Wien (AT)**

(72) Erfinder: **Maier, Herwig, Dipl.-Ing. Dr.**
**Österreichische Draukraftwerke AG**
**A-8570 Voitsberg (AT)**
Erfinder: **Schröfelbauer, Herbert, Dipl.-Ing. Dr.**
**Österr. Draukraftw. AG Kohldorferstrasse 98**
**A-9020 Klagenfurt (AT)**
Erfinder: **Filipot, Hermann, Dipl.-Ing.**
**Österr. Draukraftw. AG Kohldorferstrasse 98**
**A-9020 Klagenfurt (AT)**

(74) Vertreter: **Wallner, Gerhard, Dipl.-Ing.**
**Waagner-Biro Aktiengesellschaft Patentreferat**
**Postfach 11**
**A-1221 Wien (AT)**

**EP 0 161 497 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren und eine Vorrichtung zur Rauchgasentschwefelung von Feuerungsanlagen, wie z.B. Dampferzeugern, insbesondere von Kohlekraftwerken, wobei dem Rauchgas staubförmiges, de Schwefelbzw. die Schwefelverbindungen bindendes Natriumkarbonat wie z.B. $NaHCO_3$ und/oder $Na_2CO_3$ zugesetzt wird, welches nach der Brennkammer der Feuerungsanlage dem Rauchgas zugemischt und anschließend nach einer Kontaktzeit mit den einzubindenden Schwefelverbindungen in einem nachgeschalteten Staubfilter abgeschieden wird, bei dem das Rauchgas aus dem Dampferzeuger zuerst von der Flugasche getrennt und anschließend das Trockenadditiv in das von der Flugasche gereinigte Rauchgas bei einer Temperatur von 120 bis 320°C aufgegeben wird.

Bei der Konstruktion und beim Betrieb von großen Feuerungsanlagen, wie z.B. Dampferzeugern für Dampfturbinen, muß in gesteigertem Ausmaß darauf geachtet werden, die Emission von Schadstoffen, insbesondere von Schwefel und Schwefelverbindungen, sogering wie möglich zu halten. Bei den Schadstoffen handelt es sich vor allem um Schwefeldioxid und Schwefeltrioxid, die so weit wie möglich aus den Rauchgasen entfernt werden müssen. Dabei ist auch auf die Wirtschaftlichkeit Bedacht zu nehmen, da Anlagen zur Abgasentschwefelung im allgemeinen einen hohen apparativen Aufwand und hohe Investitionen erfordern.

Es ist bereits vorgeschlagen worden, den Schwefel im Rauchgas durch Einbringen von trockenen Additiven ähnlich der DE—A 33 18 880 direkt im Feuerungsraum chemisch zu binden. Dabei wird das Additiv mit der Kohle gemeinsam in den Feuerungsraum eingebracht. Als Additiv wird dazu vor allen Calziumoxid oder Calziumkarbonat verwendet. Dieses Trockenadditivverfahren hat einen schlecten Wirkungsgrad, ist nicht überall anwendbar und bringt auch Nachteile, wie z.B. Verschmutzung und/oder Verschlackung der Heizflächen, mit sich.

Es ist aber auch aus der US—PS 3,852,410 bekannt geworden, alkalische Sodaverbindungen auf die Abscheideschläche eines Schlauchfilters aufzubringen und dort mit dem $SO_2$-Schadgas in Kontakt zu bringen, wodurch Sorptionsbindungen zwischen dem $SO_2$ und Na ermöglicht wurden, die in einer Regenerationsanlage rückgängig gemacht werden können.

Aus der US—PS 4,220,478 ist es bekannt, ein staubförmiges Trockenadditiv, wie z.B. $NaHCO_3$, bei 315 bis 343°C in das Rauchgas aufzugeben. Nach einer Kontaktzeit wird das zum Teil verbrauchte Additiv in einem Gewebefilter abgeschieden.

Die EP—A1—0139 357 offenbart, die Flugachse vor der Einbringung des Additives in einem Filter abzuscheiden.

Die DE—A 33 18 880 offenbart eine dreistufige Vorrichtung zur Rauchgasentschwefelung, bei der nach einem Kessel und vor dem Gewebefilter eine Zuführung zum Einbringen des Kaladditives vorgesehen ist, wobei eine Hochtemperaturstufe, eine Sprühstufe und eine trockene Kontaktstrecke im Rauchgasstrom angeordnet ist.

Die Erfindung hat es sich zur Aufgabe gestellt, bei ester Additivausnutzung die Reinigung der Abgase von Schadstoffen auf mindestens 80% zu gewährleisten und die belandenen Additive gegebenenfalls getrennt vom Flugstaub zu gewinnen.

Die eingangs genannte Erdingung ist dadurch gekennzeichnet, daß das Rauchgas mit dem Trockenadditiv durch Zumischen von kaltem Rauchgas abgekühlt und anschließend in einem Staubfilter trocken gereinigt wird, wobei die durchschnittliche Verweilzeit des Trockenadditivs im als Gewebefilter ausgebildeten Staubfilter etwa 20 Minuten beträgt.

Die Vorrichtung zur Durchführung des erfindungsgemäßen Verfahrens ist dadurch gekennzeichnet, daß nach den Nachschaltheizflächen des Dampferzeugers, aber vor dem Gewebefilter, die Zuführung zum Einbringen des Additivs und nach dieser eine Zufuhrleitung für kaltes Rauchgas angeordnet ist.

Die Reaktion des $NaHCO_3$ mit $SO_2$ läuft nach folgenden Bruttogleichungen ab:

$$2\,NaHCO_3 \xrightarrow{T} Na_2CO_3 + CO_2 + H_2O \qquad (I)$$

$$Na_2CO_3 \xrightarrow{SO_2 + 1/2\,O_2\,(SO_3)} Na_2SO_4 + CO_2 \qquad (II)$$

Der erste Schritt (Gleichung I) ist eine chemische Spaltungsreaktion, zu welcher entsprechende Temperaturen von 120°C bis über 300°C notwendig sind. Je höher die Reaktionstemperatur ist, desto spontaner ist die Abspaltung von $CO_2$ und $H_2O$ und desto aktiver ist das entstehende Reaktionsprodukt $Na_2CO_3$ durch Vergrößerung der aktiven Oberfläche.

Es wurde erkannt, daß die anschließende Einbindereaktion (Gleichung II) des $Na_2CO_3$ mit $SO_2$ umso vollständiger ist, je länger die Verweilzeit ist.

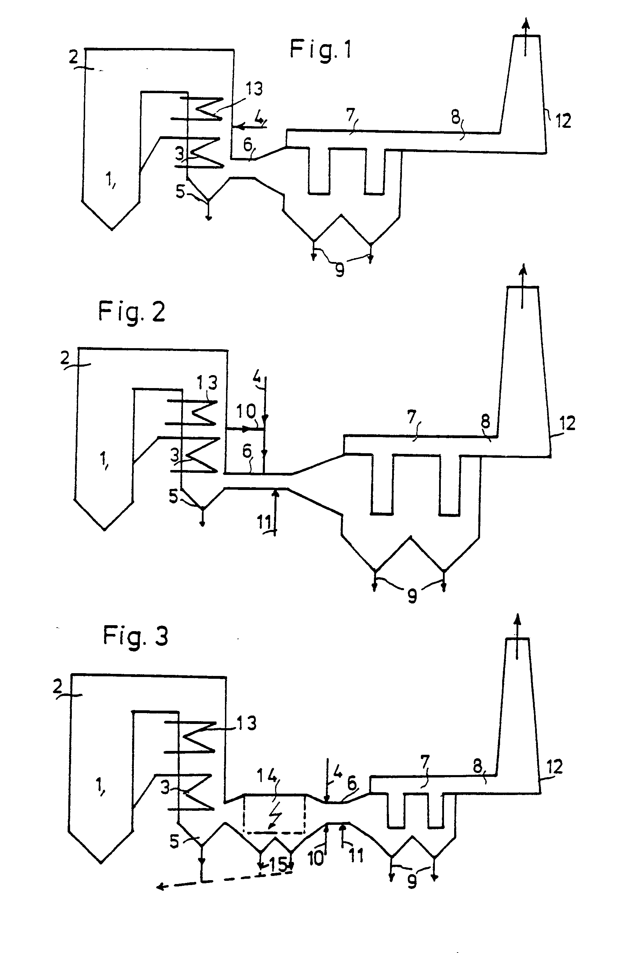

Im folgenden wird die Erfindung beispielsweise anhand der schematischen Zeichnung näher erläutert, wobei in den Fig. 1 bis 3 die Additivzugabe nach einem Dampferzeuger an verschiedenen Stellen des Rauchgasabzuges erfolgt.

Fig. 1 zeigt schematisch ein Ausführungsbeispiel für eine Feuerungsanlage, bei der die Zuführung (4) des Additives nach den letzten von Wasser durchflossenen Nachschaltheizflächen (13) eines

Dampferzeugers (2), aber vor dem Luftvorwärmer (3) im Temperaturbereich von etwa 300°C des Rauchgases erfolgt ohne Darstellung der Leitung (11) für die Zufuhr von kaltem Abgas. In der Brennkammer (1) des Dampferzeugers (2) wird schwefelhältiger Brennstoff verbrannt. Die entstehende heißen Rauchgase beheizen den Dampferzeuger (2). Unmittelbar vor dem Luftvorwärmer (3) erfolgt die Zuführung (4) des Additivs in den Rauchgasstrom. Als Additiv wird $NaHCO_3$ und/oder $NaCO_3$ verwendet. Die Temperatur beträgt an der Eindüsungsstelle etwa 320°C. Nach Passieren des Luftvorwärmers (3) beträgt die Rauchgastemperatur im Staubabscheider (5) etwa 170°C. Die Rauchgase gelangen dann über die Leitung (6) in den Gewebefilter (7), von wo die gereinigten Rauchgase über die Leitung (8) zum Schornstein (12) in die freie Atmosphäre geleitet werden. Das Additiv mit den gebundenen Schadstoffen und der Flugasche bleibt im vom Rauchgas durchströmten Gewebefilter hängen und wird bei 9 ausgetragen.

Die Zuführung des Additivs vor dem Luftvorwärmer (3) gewährleistet durch die Rauchgastemperatur von etwa 320°C die notwendige Reaktionstemperatur für den oben beschriebenen ersten Schritt gemäß Gleichung (I) und eine minimale Verweilzeit des Additivs im Rauchgasstrom. Durch den Luftvorwärmer (3) wird das Rauchgas unter die maximale Betriebstemperatur des Gewebefilters (7) abgekühlt. Es hat sich in überraschender Weise gezeigt, daß sich durch die Anordnung des Gewebefilters die Verweilzeit des Additivs im Rauchgasstrom derart beeinflussen läßt, daß die Einbindereaktion des $Na_2CO_3$ mit $SO_3$ mit einem hohen Einbindegrad erfolgen kann. Die Abreinigungszyklen des Gewebefilters können entsprechend verlängert und optimiert werden.

Das erfindungsgemäße Verfahren eignet sich insbesondere für nachzurüstende Altanlagen, die schwefelhältige Stein- oder Braunkohlen verfeuern, wobie die Probleme Flugasche und Schwefeldioxid gemeinsam und in vorteilhafter Weise einer Lösung zugeführt werden. Besonders günstig ist es, wenn bereits ein Gewebefilter zur Endreinigung der Abgase vorhanden ist.

Ergebnisse bei einer Versuchsanlage ergaben mit dem erfindungsgemäßen Verfahren unter Verwendung von $NaHCO_3$ aks Additiv Entschwefelungsgrade von 80% bis über 90%. Dabei wurden Reaktionstemperaturen für den ersten Schritt gemäß Formel (I) von ca. 260°C angewendet, und die Verweilzeiten für den zweiten Schritt gemäß Formel (II) betrugen ca. 20 Minuten. Die Eintrittstemperatur in das Gewebefilter betrug 120°C. Durch diese Maßnahmen lassen sich die gesetzlichen Vorschreibungen zur Luftreinhaltung auch mit einem Trockenadditiv-Verfahren erfüllen, ohne daß Wiederaufheizanlagen notwendig sind oder Taupunktkorrosionen auftreten. Die Rauchgase können nun bis auf den reduzierten Taupunkt abgekühlt und die Wärme zweckmäßig verwendet werden.

Bei dem Ausführungsbeispiel gemäß Fig. 2 erfolgt die Zuführung (4) des Additivs über die Heißgasleitung (10) in die Leitung (6) vor dem Gewebefilter (7), um in der Leitung (6) eine höhere Temperatur zu erzielen, was für den ersten Schritt gemäß allgemeiner Formel (I) vorteilhaft ist. Über die Leitung (11) kann kaltes Rauchgas zugeführt werden, um das Rauchgas wieder auf die für die Gewebefilter erträgliche Temperatur abzukühlen. Die Abkühlung kann auch durch einen Kühler erzielt werden. Die Flugasche, vermischt mit $Na_2SO_4$ und gegebenenfalls unverbrauchtem Additiv, wird bei 9 ausgetragen.

Bei dem Ausführungsbeispiel gemäß Fig. 3 erfolgt die Additivzuführung (4) vor dem Gewebefilter (7) in das durch die Leitung (6) strömende Rauchgas. Das Rauchgas gelangt vom Dampferzeuger in den Rauchgasfilter (14), wie z.B. Elektrofilter, Gewebefilter oder Zyklon, und wird dort von der Flugasche gereinigt, deren Austragung bei 15 erfolgt. Das gereinigte Rauchgas wird in der Leitung (6) mit dem Additiv versetzt, wobei eine gegebenenfalls notwendig werdende Erhöhung der Reaktionstemperatur durch Zufuhr von Heißgas durch die Heißgasleitung (10) erzielt wird. Im Gewebefilter (7) erfolgt dann die Abscheidung des $Na_2SO_4$, das bei 9 ausgetragen wird. Über die Leitung 8 gelangt das gereinigte Rauchgas in den Schornstein (12). Diese Schaltung hat den Vorteil, daß das Entschwefelungsprodukt $Na_2SO_4$ in verkaufsfähiger Reinheit anfällt und nicht oder nur wenig mit Flugasche vermischt ist. Ein weiterer Vorteil besteht darin, daß die Verweilzeit des Additivs am Gewebefilter verlängert werden kann, da der Staubanfall durch die Vorabscheidung der Flugasche geringer ist und dadurch es zu einer besseren Ausnützung des Additivs und in Konsequenz dazu zu einer Verbesserung der Reinheit des Produktes $Na_2SO_4$ kommt.

Im Prinzip kann das Gewebefilter (7) durch jedes andere Filter ersetzt werden, doch verkürzt, sich dadurch die Verweilzeit des teuren Additivs, wodurch die Additiv-Ausnützung zurückgeht und die Betriebskosten entsprechend ansteigen.

**Patentansprüche**

1. Verfahren zur Rauchgasentschwefelung von Feuerungsanlagen, wie z.B. Dampferzeugern, insbesondere von Kohlekraftwerken, wobei dem Rauchgas staubförmiges, den Schwefel bzw. die Schwefelverbindungen bindendes Natriumkarbonat wie z.B. $NaHCO_3$ und/oder $Na_2CO_3$ zugesetzt wird, welches nach der Brennkammer der Feuerungsanlage dem Rauchgas zugemischt und anschließend nach einer Kontaktzeit mit den einzubindenden Schwefelverbindungen in einem nachgeschalteten Staubfilter abgeschieden wird, bei dem das Rauchgas aus dem Dampferzeuger zuerst von der Flugasche getrennt und anschließend das Trockenadditiv in das von der Flugasche gereinigte Rauchgas bei einer Temperatur von 120 bis 320°C aufgegeben wird, dadurch gekennzeichnet, daß das Rauchgas mit dem Trockenadditiv durch Zumischen von kaltem Rauchgas abgekühlt und anschließend in einem Staubfilter (7) trocken gereinigt

wird, wobei die durchschnittliche Verweilzeit des Trockenadditivs im als Gewebefilter ausgebildeten Staubfilter (7) etwa 20 Minuten beträgt.

2. Vorrichtung zur Durchführung des Verfahrens nach Anspruch 1, wobei dem Dampferzeuger ein Staubfilter in Form eines Gewebefilters nachgeschaltet ist, und eine Zuführung zum Einbringen des Additivs vorgesehen ist, dadurch gekennzeichnet, daß nach den Nachschaltheiztflächen (13) des Dampferzeugers, aber vor dem Gewebefilter (7), die Zuführung (4) zum Einbringen des Additivs und nach dieser eine Zufuhrleitung (11) für kaltes Rauchgas angeordnet ist.

3. Vorrichtung nach Anspruch 2, dadurch gekennzeichnet, daß in die Einströmleitung (6) des Gewebefilters (7) eine Heißgasleitung (10) vom Dampferzeuger (2) einmündet, in welche das Additiv eingeleitet ist.

4. Vorrichtung nach Anspruch 2, dadurch gekennzeichnet, daß im Rauchgasstrom ein Rauchgasfilter (14) zur Abscheidung der Flugasche, darauffolgend die Zuführung (4) des Additivs und danach der Gewebefilter (7) vorgesehen ist.

**Revendications**

1. Procédé de désulfurisation de fumée d'installations de chauffage telles que générateurs de vapeur, en particulier de centrales thermiques à charbon, suivant lequel carbonate de sodium tel que $NaHCO_3$ et/ou $Na_2CO_3$ qui retient le soufre ou les composés de soufre est ajouté aux gaz de fumée purifiés en avail de la chambre de combustion de l'installation de chauffage et ensuite est séparé dans un filtre dépoussiéreur en aval après une période de contact avec les composés de soufre retenus, et suivant lequel le gaz de fumée du générateur de vapeur sont d'abord séparés des cendres volantes et ensuite l'additif sec est chargé dans les gaz de fumée purifies des cendres volantes à une température de 120 à 320°C, caractérisé en ce que le gaz de fumée avec l'additif sec est refroidi en ajoutant du gaz de fumée froid et ensuite est purifié de manière sèche dans un filtre dépoussiéreur (7), le temps de séjour moyen de l'additif sec dans le filtre dépoussiéreur (7) construit comme filtre texturé s'élévant à environ 20 minutes.

2. Dispositif pour l'exécution du procédé suivant revendication 1 dans lequel un filtre dépoussiéreur construit comme filtre texturé est connecté en aval du générateur de vapeur et une amenée de chargement de l'additif est prévue, caractérisé en ce que l'amenée (4) de chargement de l'additif est arrangée en aval des surfaces de chauffage (13) du générateur de vapeur, mais en amont du filtre texturé (7) et qu'en aval de cette amenée une ligne d'amenée (11) de gaz de fumée froid est arrangé.

3. Dispositif suivant revendication 2, caractérisé en ce qu'un conduit de gaz chaud (10) venant du générateur de vapeur (2) débouche dans la ligne d'admission (6) du filtre texturé (7) l'additif étant introduit dans ce conduit de gaz chaud.

4. Dispositif suivant revendication 2, caractérisé en ce qu'un filtre de gaz de fumée (14) pour la séparation de cendre volante est prévu dans le courant de gaz de fumée, ensuite l'amenée (4) de l'additif et ensuite le filtre texturé (7).

**Claims**

1. Process for the desulphurization of flue gas from combustion plants such as steam generators, particularly coal power stations, according to which powdery sodium carbonate suh as e.g. $NaHCO_3$ and/or $Na_2CO_3$ binding sulphur or sulphur compounds is added to the flue gas downstream of the combustion plant's combustion chamber and subsequently is separated after a certain contact time together with the bound sulphur compounds in a downstream dust filter, according to which the flue gas from the stream generator is first separated from the fly ash and subsequently the dry additive is added to the flue gas separated from fly ash at a temperature of 120 to 320°C, characterized in that the flue gas containing the dry additive is cooled by adding cold flue gas and subsequently is dry cleaned in a dust filter (7), whereby the medium retention time of the dry additive in the dust filter (7) designed as fibrous filter amounts to approx. 20 minutes.

2. Device for carrying out the process according to claim 1, whereby a dust filter designed as fibrous filter is connected downstream of the steam generator and a feeder for charging the additive has been provided, characterized in that the feeder (4) for charging the additive has been arranged downstream of the heating surfaces (13) of the steam generator but upstream of the fibrous filter (7) and that downstream of this filter a feeding line (11) for cold flue gas has been arranged.

3. Device according to claim 2, characterized in that a hot gas duct (10) from the steam generator (2) joins the admission line (6) of the fibrous filter (7) whereby the additive has been fed into this hot gas duct.

4. Device according to claim 2, characterized in that a flue gas filter (14) for the separation of fly ash, followed by the feeder (4) of the additive and subsequently the fibrous filter (7) have been provided.

Fig. 1

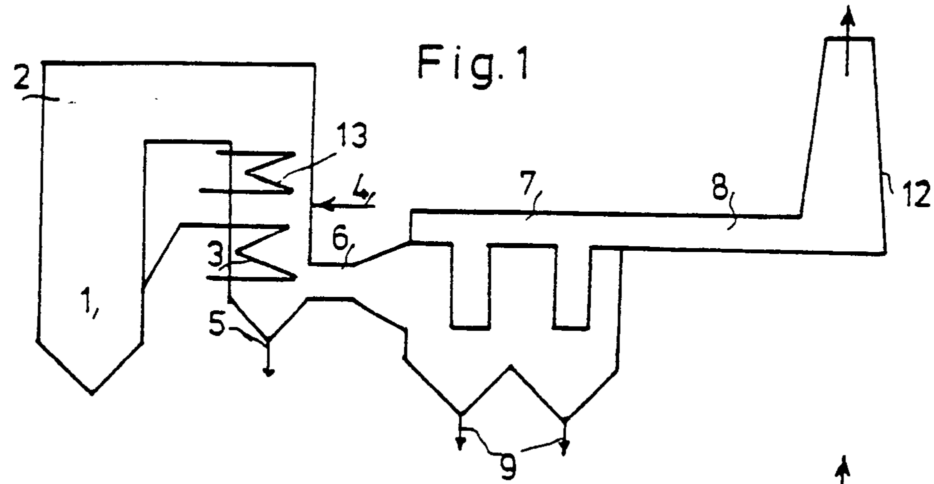


Fig. 2

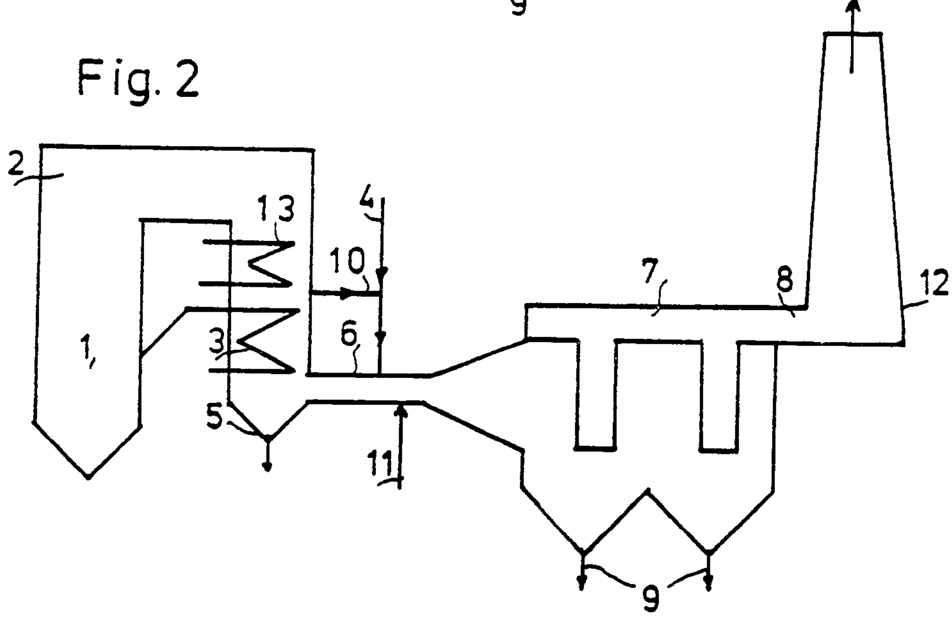


Fig. 3